Europäisches Patentamt

European Patent Office

Office européen des brevets

(11) Veröffentlichungsnummer : **0 150 446**
**B1**

(12) **EUROPÄISCHE PATENTSCHRIFT**

(45) Veröffentlichungstag der Patentschrift :
**19.10.88**

(21) Anmeldenummer : **84115834.8**

(22) Anmeldetag : **19.12.84**

(51) Int. Cl.⁴ : **G 01 F 11/24, B 65 G 53/46**

(54) **Vorrichtung zum kontinuierlichen, gravimetrischen Dosieren und pneumatischen Fördern von schüttfähigem Gut.**

(30) Priorität : **23.12.83 DE 3346897**

(43) Veröffentlichungstag der Anmeldung :
**07.08.85 Patentblatt 85/32**

(45) Bekanntmachung des Hinweises auf die Patenterteilung : **19.10.88 Patentblatt 88/42**

(84) Benannte Vertragsstaaten :
**AT BE CH FR GB LI**

(56) Entgegenhaltungen :
**EP-A- 0 086 312**
**AT-A-    368 747**
**DE-A- 3 323 041**
**FR-A- 2 419 241**
**US-A- 3 672 646**
**US-A- 4 179 043**

(73) Patentinhaber : **Pfister GmbH**
**Stätzlinger Strasse 70**
**D-8900 Augsburg (DE)**

(72) Erfinder : **Häfner, Hans W.**
**Fichtenweg 15**
**D-8890 Aichach-Walchshofen (DE)**

(74) Vertreter : **Kahler, Kurt, Dipl.-Ing.**
**Postfach 248 Gerberstrasse 3**
**D-8948 Mindelheim (DE)**

## Beschreibung

Die Erfindung betrifft eine Vorrichtung zum kontinuierlichen, gravimetrischen Dosieren und pneumatischen Fördern von schüttfähigem Gut gemäß dem Oberbegriff des Patentanspruchs 1.

Eine derartige Vorrichtung ist aus der DE-A-32 17 406 bekannt.

Mit einer derartigen Vorrichtung wird im allgemeinen sehr feinkörniges Gut, wie Kohlestaub, Zement oder dergleichen gefördert, so daß trotz der stirnseitigen Abdichtung des Rotors gegenüber dem Gehäuse die Gefahr besteht, daß Schüttgut aus den Rotorfördertaschen oder -kammern in den Zwischenraum austritt, der zwischen dem Umfang des Rotors und dem Gehäuse besteht. Hierdurch wird nicht nur die Genauigkeit der Wägung vermindert, sondern es tritt ein erhöhter Verschleiß auf und das zum Antrieb des Rotors erforderliche Drehmoment erhöht sich.

AT-A-368 747 beschreibt eine Zellradschleuse, bei der das vollkommengeschlossene, starre Gehäuse, in dem der Zellradmotor umläuft, ständig unter Luftdruck gehalten wird. Der Außenumfang des Rotors besitzt eine glatte Oberfläche; Düsen zum Ausblasen eines schmalen radialen Innenraumes sind nicht vorgesehen. FR-A-24 19 241 befaßt sich mit einer ähnlichen Zellradschleuse, bei der das eigentliche den Rotor umgebende Gehäuse nochmals mit einem Außengehäuse umgeben ist, das unter Überdruck gesetzt ist.

Der Erfindung liegt deshalb die Aufgabe zugrunde, eine Vorrichtung gemäß dem Oberbegriff des Patentanspruchs 1 derart weiterzubilden, daß die Wägegenauigkeit verbessert, die Lebensdauer verlängert und die Leistungsaufnahme verringert wird.

Diese Aufgabe wird gelöst durch eine Vorrichtung mit den Merkmalen des Patentanspruchs 1. Bevorzugte Weiterbildungen dieser Vorrichtung sind in den abhängigen Ansprüchen gekennzeichnet.

Durch die ständige Sperrluftvorlage wird ein Austreten von Schüttgut aus den Rotorkammern in die Radialkammer verhindert. Man erhält eine gute Reproduzierbarkeit und Nullpunktkonstanz.

So ist es besonders vorteilhaft, als Druckluftquelle eine Abzweigung aus dem vorhandenen pneumatischen Fördersystem zu wählen.

Eine besonders gute Reinigung der Radialkammer von Schüttgut, das etwa bei Funktionsstörungen, wie Explosionen oder Druckstößen ausgetreten ist, ergibt sich dann, wenn ein oder mehrere Austrittsöffnungen zu dem pneumatischen Fördersystem vorgesehen sind, so daß die Radialkammer mit einem scharfen Luftstrom von verdichtetem Schüttgutstaub abgereinigt werden kann.

Ausführungsbeispiele der erfindungsgemäßen Vorrichtung werden nachstehend anhand der Zeichnungen erläutert. Es zeigen

Fig. 1 eine Seitenansicht einer Ausführungsform der erfindungsgemäßen Vorrichtung,

Fig. 2 die Ausführungsform nach Fig. 1 in Richtung des Pfeils VI in Fig. 1 gesehen,

Fig. 3 eine Ausführungsform der erfindungsgemässen Vorrichtung ähnlich derjenigen der Figuren 1 und 2, teilweise im Schnitt und unter Veranschaulichung erfindungsgemäßer Merkmale,

Fig. 4 einen Schnitt durch den Entleerungsausblaskanal mit einer dazwischenliegenden Fördertasche des Rotors, und

Fig. 5 eine Draufsicht eines Ausschnitts des Rotors der erfindungsgemäßen Vorrichtung.

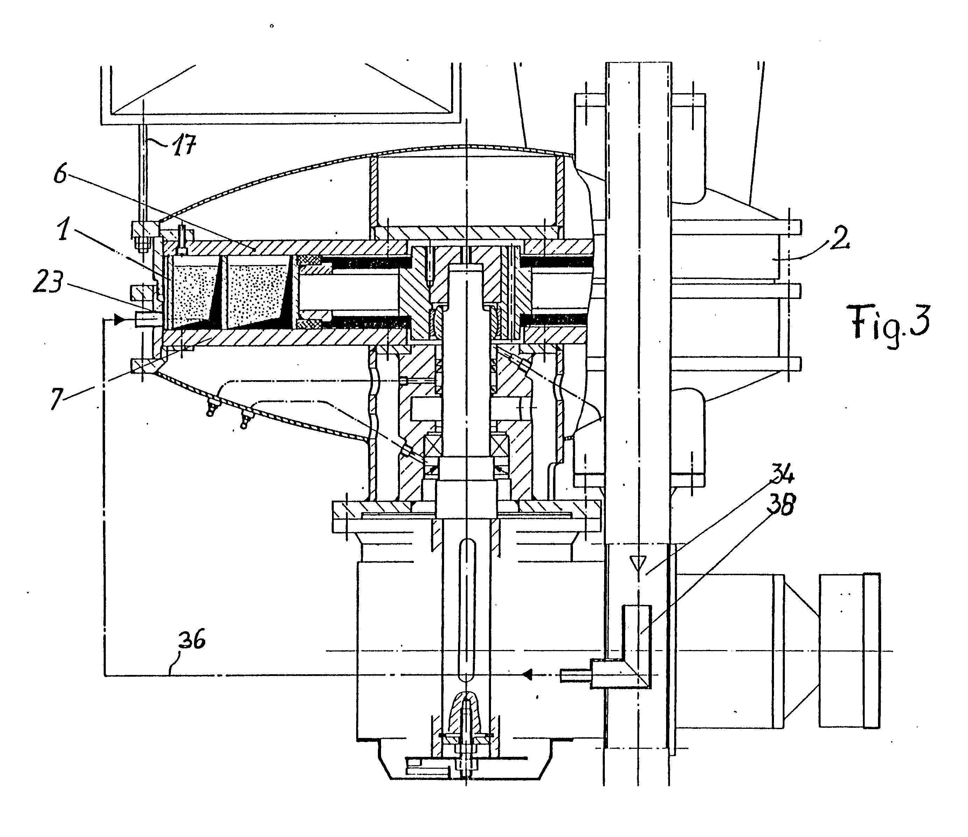

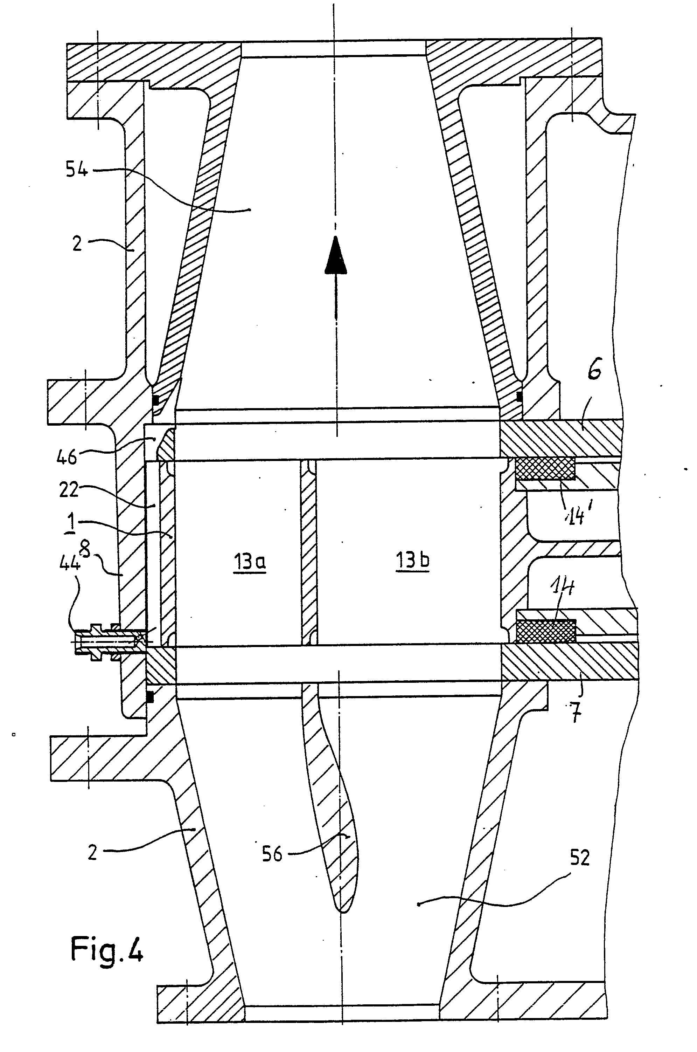

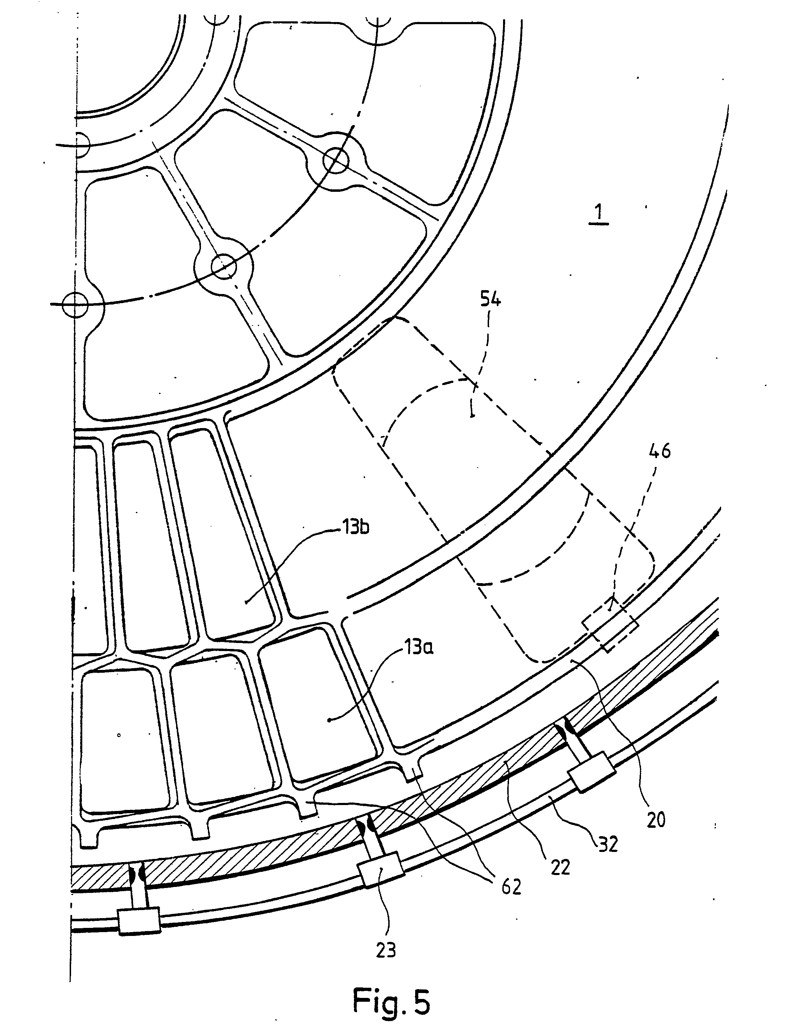

Die Figuren zeigen eine Ausführungsform der erfindungsgemäßen Vorrichtung 15 mit einem Gehäuse 2, das einen Rotor 1 dicht umschließt. Der Rotor 1 ist über eine Welle drehbar und antreibbar gelagert. Als Antrieb dient eine Motor-Getriebe-Einheit 4, die über Drehmomentstützen 5 mit dem Gehäuse 2 verbunden ist. Der Rotor 1 läuft zwischen zwei zueinander parallelen Dichtplatten 6 und 7, die über einen zylindrischen Mantel 8 miteinander verbunden sind (vgl. Fig. 4). Der Rotor 1 besitzt einen zylindrischen Mantel 20 sowie zwei Gruppen in konzentrischen Ringen angeordneter Fördertaschen 13a, 13b, wobei die Gruppen zueinander versetzt sind, wie dies deutlich aus Fig. 5 hervorgeht. Kreisringförmige Dichtungen 14, 14' dichten die Fördertaschen zum Rotorinneren ab. Das Gehäuse ist schwenkbar um die Achse II-II an den Punkten 16, 16' an einem Gerüst 50 angelenkt und wird an der linken Gehäuseseite (Fig. 2) von einer Kraftmeßeinrichtung 17 gehalten.

Das gravimetrisch zu dosierende Gut ist in einem oberhalb des Gehäuses 2 angeordneten Behälter 19 gelagert und wird beispielsweise über eine Zellenradschleuse 40 und einen elastischen Kompensator 24 der Beschickungsöffnung für den Rotor 1 zugeführt.

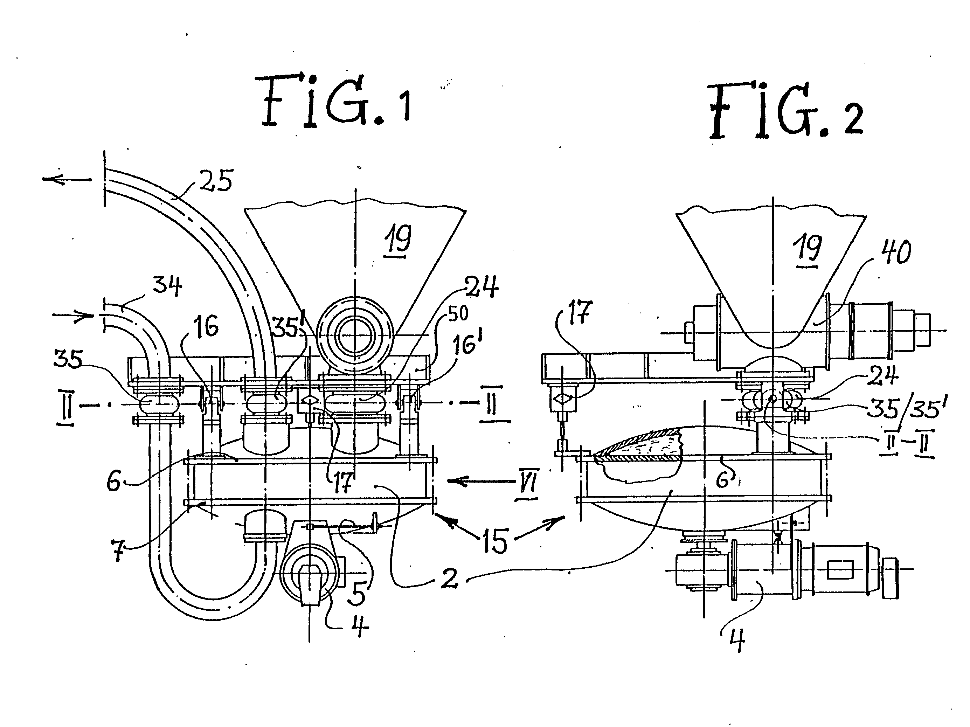

Die Entleerung der an der Beschickungsöffnung gefüllten Fördertasche erfolgt an der in Fig. 4 gezeigten Entleerungsstation durch Ausblasen der Fördertaschen 13a und 13b. Hierzu ist eine am Gerüst 15 befestigte Blasleitung 34 über einen elastischen Kompensator 35 an den unteren Anschluß 52 des Gehäuses 1 geführt. Das aus den Fördertaschen 13a, 13b ausgeblasene Gut wird über den oberen Anschluß 54 in eine Abförderleitung 25 (Fig. 1) geblasen, die mit dem oberen Anschluß 54 über einen Kompensator 35' in Verbindung steht. Wie aus den Figuren 1 und 2 ersichtlich, liegen die Kompensatoren 24, 35, 35' und die Anlenkpunkte 16 und 16' sämtlich auf der Schwenkachse II-II.

Im Betrieb schwenkt das Gehäuse 2 je nach den Fördertaschen 13a, 13b zugeführter Menge an zu messendem Gut um die Achse II-II und beaufschlagt die Kraftmeßvorrichtung 17 mit einem entsprechenden Drehmoment.

Wie bereits eingangs geschildert, besteht zwischen der Innenwand des zylindrischen Gehäuseteils 8 und dem zylindrischen Rotormantel 20 ein Zwischenraum 22. Obwohl die Stirnkanten des Rotoraußenmantels 20 gegen die Dichtplatten 6, 7 gedrückt werden, kann mit der Zeit Schüttgut aus den Fördertaschen 13 in den Zwischenraum 22 eintreten. Eine besondere Gefahr besteht dann, wenn ein plötzlicher starker Druck auftritt, wie er durch eine Explosion hervorgerufen werden kann. Das sich im Zwischenraum 22 ansammelnde Schüttgut bewirkt eine erhöhte Reibung, so daß sich der Verschleiß vergrößert und ein stärkeres Drehmoment vom Antrieb des Rotors 1 erzeugt werden muß. Auch geht die Reproduzierbarkeit der Wägung und die Nullpunktkonstanz verloren.

Es wird deshalb in den Zwischenraum 22 eine Sperrluftvorlage eingebracht. Wie insbesondere aus den Figuren 3 und 5 ersichtlich, ist hierfür im zylindrischen Gehäuseteil 8 mindestens eine Düse 23 eingesetzt, die mit einer entsprechenden Druckquelle in Verbindung steht. Obwohl hierfür eine vom Dosiersystem unabhängige Druckquelle verwendet werden kann, wird bevorzugt ein Staurohr 38 in die Blasleitung 34 eingefügt, das mit der Düse 23 über eine Leitung 36 verbunden ist.

Es können auch mehrere Düsen 23 längs des Umfangs des zylindrischen Gehäuseteils 8 angeordnet sein, die vorzugsweise über eine gemeinsame Ringleitung 32 an die Leitung 36 angeschlossen sind (vgl. Fig. 5). In die Leitung 36 kann eine einstellbare Druckregelvorrichtung eingefügt sein. Bei einer ersten Ausführungsform sind in der Nähe der Anschlüsse 52, 54 keine Düsen 23 vorgesehen.

Es ist jedoch in der Nähe der Anschlüsse 52, 54 mindestens eine Düse 44 (vgl. Fig. 4) in der Nähe der unteren Dichtplatte 7 im zylindrischen Gehäuseteil 8 angebracht. Die Austrittsöffnung der Düse 44 in den Zwischenraum 22 ist bevorzugt nach oben gerichtet. Annähernd oberhalb jeder Düse 44 ist zwischen der Dichtplatte 6 und dem zylindrischen Gehäuseteil 8 ein als Kanal ausgebildete Austrittsöffnung 46 vorgesehen, die in den oberen Anschluß 54 mündet. Diese Düse 44 kann von einer beliebigen Druckquelle aus mit Luft von einem plötzlichen hohen Druck beaufschlagt werden, so daß der Zwischenraum 22 kräftig ausgeblasen wird, wobei das Schüttgut, das sich insbesondere nach Explosionen im Zwischenraum 22 angesammelt hat, in den Anschluß 54 des Blaskanals abgeführt wird.

Die Austrittsöffnung 46 könnte auch versperrbar gemacht werden, damit der Zwischenraum 22 unter Normalbedingungen mit der Sperrluftvorlage beaufschlagt werden kann. Anstelle der speziellen Düsen 44 können auch normale Düsen 23 für das spezielle Ausblasen Verwendung finden. Die Düse 44 wird bevorzugt über eine Druckregelvorrichtung an eine beliebige Druckquelle, wie einen Kompressor, eine vorhandene Druckluftleitung oder dergleichen, angeschlossen.

Von besonderer Bedeutung ist auch die Ausbildung des Rotors 1, wie sie insbesondere aus Fig. 5 hervorgeht. So sind einmal an dem Rotoraußenmantel 20 in den Zwischenraum 22 reichende, Labyrinthdichtungen bildende flache Stege 62 angeordnet, die zur Rotorachse parallel verlaufen und den Zwischenraum 22 in Umfangsrichtung in radiale Kammern unterteilen. Hierdurch werden konzentrierte Schüttgutablagerungen im Zwischenraum 22 verhindert und ein konzentriertes Ausblasen der Kammern mittels der Düse 44 ermöglicht.

Die bereits beschriebene Unterteilung und Versetzung der Fördertaschen 13a und 13b zueinander führen zu einem gleichmäßigerem Ausblasen der Fördertaschen an der Entleerungsöffnung gemäß Fig. 4. Die Trennwand 56 dient zur Aufteilung der Blasluft auf die Fördertaschen 13a einerseits und 13b andererseits. In Fig. 5 sind auch die Konturen der oberen und unteren Öffnung des oberen Anschlusses 54 sowie der Ausblaskanal 46 in gestrichelten Linien angedeutet.

**Patentansprüche**

1. Vorrichtung zum kontinuierlichen, gravimetrischen Dosieren und pneumatischen Fördern von schüttfähigem Gut, das mit einer Fördereinrichtung über eine Meßstrecke geführt wird, wobei die Fördereinrichtung als druckdicht in einem Gehäuse (2) angeordneter, mit nicht rotierenden Abdeckungen (6, 7) und mit Fördertaschen (13a, 13b) versehener Rotor (1) mit im wesentlichen vertikaler Achse ausgebildet ist und das Gehäuse je eine Beschickungs- und Entleerungsöffnung mit Anschlüssen (52, 54) an Leitungen eines pneumatischen Fördersystems (25, 34) besitzt, und wobei zwischen dem Rotorumfang (20) und dem Gehäuse (2) eine Radialkammer (22) liegt; dadurch gekennzeichnet, daß die Radialkammer (22) mit einer Druckluftquelle verbindbar ist, die einen derartigen Luftstrom in der Radialkammer erzeugen kann, daß diese von eingedrungenem Schüttgut gereinigt wird, wobei mindestens eine Druckluftzuführdüse (44) und mindestens eine Austrittsöffnung (46) jeweils vertikal annähernd übereinanderliegen und in der Nähe der unteren bzw. oberen Rotorabdeckung (6, 7) und in der Nähe der Anschlüsse (52, 54) des Fördersystems (25, 34) angebracht sind.

2. Vorrichtung nach Anspruch 1, dadurch gekennzeichnet, daß die Druckluft aus dem pneumatischen Fördersystem abgeleitet ist.

3. Vorrichtung nach Anspruch 2, dadurch gekennzeichnet, daß in dem pneumatischen Fördersystem ein Staurohr (5) eingesetzt ist, über das die Druckluft abgenommen wird.

4. Vorrichtung nach einem der Ansprüche 1 bis 3, dadurch gekennzeichnet, daß zusätzlich längs des Umfangs des Gehäuses mehrere Druckluftzuführdüsen (23) angeordnet sind.

5. Vorrichtung nach einem der vorhergehenden Ansprüche, dadurch gekennzeichnet, daß der Druck ständig aufrechterhaltbar ist oder daß die Zuführdüsen plötzlich mit hohem Druck beaufschlagbar sind.

6. Vorrichtung nach einem der Ansprüche 1 bis 5, dadurch gekennzeichnet, daß die Austrittsöffnung (46) in das pneumatische Fördersystem (25) führt.

7. Vorrichtung nach einem der Ansprüche 1 bis 6, dadurch gekennzeichnet, daß die Austrittsöffnung (46) verschließbar ist.

8. Vorrichtung nach einem der Ansprüche 1 bis 7, dadurch gekennzeichnet, daß die Druckluftzuführdüse (44) radial an den Umfang des Gehäuses (2) an das untere Ende der Radialkammer (22) angesetzt ist.

9. Vorrichtung nach Anspruch 8, dadurch gekennzeichnet, daß die Düsenaustrittsöffnung der Druckluftzuführdüse (44) schräg nach oben in die Radialkammer gerichtet ist.

10. Vorrichtung nach einem der Ansprüche 1 bis 9, dadurch gekennzeichnet, daß die Austrittsöffnung (46) am Gehäuse (2) in nächster Nähe zu dem pneumatischen Fördersystem angeordnet ist.

11. Vorrichtung nach einem der Ansprüche 1 bis 10, dadurch gekennzeichnet, daß die Druckluftquelle einen hohen Druck aufweist und über ein Druckregelvorrichtung mit der Radialkammer (22) verbunden ist.

12. Vorrichtung nach einem der Ansprüche 1 bis 11, dadurch gekennzeichnet, daß die Austrittsöffnung (46) in das pneumatische Fördersystem ausgangsseitig, d.h. in Förderrichtung nach dem Rotor, eingeführt ist.

13. Vorrichtung nach einem der vorhergehenden Ansprüche, dadurch gekennzeichnet, daß am Rotorumfang (20) flache, zur Rotorachse parallel verlaufende, mit der Innenwand des Gehäuses (2) Labyrinthdichtungen bildende Stege (62) angeordnet sind, die die Radialkammer (22) in Umfangsrichtung in radiale Kammern unterteilen.

14. Vorrichtung nach einem der vorhergehenden Ansprüche, dadurch gekennzeichnet, daß die Fördertaschen (13a, 13b) in zwei konzentrischen Ringen angeordnet sind und die Fördertaschen des einen Rings zu denen des anderen versetzt sind.

**Claims**

1. An apparatus for continuous gravimetric metering and pneumatic feeding of pourable material routed by means of a feeding device through a measuring distance, the feeding device being formed as a rotor (1) arranged in a housing (2) and provided with non-rotating covers (6, 7) and with feeding pockets (13a, 13b) and having an essentially vertical axis, and the housing being provided with charging and discharging openings having connections (52, 54) to lines of a pneumatic feeding system (25, 34), and where in a radial chamber (22) is provided between the periphery (20) of the rotor and the housing (2), characterized in that the radial chamber (22) is adapted to be connected to a pressurized air source adapted to produce such an air flow in the radial chamber that the latter is cleaned from penetrated pourable material, at least one pressurized air supply nozzle (44) and at least one outlet opening (46) being arranged each in essentially vertical alignment and adjacent to the upper and lower, rotor cover (6, 7), respectively, and adjacent to the connections (52, 54) of the feeding system (25, 34).

2. Apparatus of claim 1, characterized in that the pressurized air is derived from the pneumatic feeding system.

3. The apparatus of claim 2, characterized in that in the pneumatic feeding system a collecting tube (5) is inserted for tapping the pressurized air.

4. The apparatus of any of the claims 1 to 3, characterized in that several pressurized air supply nozzles (23) are additionally arranged along the periphery of the housing.

5. The apparatus of any of the preceding claims, characterized in that the pressure is adapted to be maintained continuously or that a high-pressure is applied suddenly to the supply nozzles.

6. The apparatus of any of the claims 1 to 5, characterized the exit opening (46) opens into the pneumatic feeding system (24).

7. The apparatus of any of the claims 1 to 6, characterized in that the exit opening (46) is closeable.

8. The apparatus of any of the claims 1 to 7, characterized in that the pressurized air supply nozzle (44) is radially attached to the periphery of the housing (2) at the lower end of the radial chamber (22).

9. The apparatus of claim 8, characterized in that the nozzle outlet opening of the pressurized air supply nozzle (44) extends inclined upward into the radial chamber.

10. The apparatus of any of the claims 1 to 9, characterized in that the exit opening (46) is provided at the housing (2) very close to the pneumatic feeding system.

11. The apparatus of any of the claims 1 to 10, characterized in that the pressurized air source provides a high pressure and is connected to the radial chamber (22) through a pressure control means.

12. The apparatus of any of the claims 1 to 11, characterized in that the exit opening (46) opens into the pneumatic feeding system at its exit side, i.e. in feeding direction after the rotor.

13. The apparatus of any of the preceding claims, characterized in that at the rotor periphery (20) flat ledges (62) are arranged extending parallel to the rotor axis and forming labyrinth sealings with the inner wall of the housing (2) and subdividing the radial chamber (22) in peripheral direction into radial chambers.

14. The apparatus of any of the preceding claims, characterized in that the feeding pockets (13a, 13b) are arranged in two concentric rings and that the feeding pockets of one ring are set off in respect of those of the other ring.

**Revendications**

1. Dispositif pour un dosage gravimétrique continu à transport pneumatique d'une matière en vrac, qui est canalisée au moyen d'un dispositif transporteur sur une zone de mesure, le dispositif transporteur étant agencé sous la forme d'un rotor (1), disposé de façon étanche à la pression dans un carter (2), pourvu de recouvrements non tournants (6, 7) et de poches de transport (13a, 13b), et dont l'axe est sensiblement vertical, tandis que le carter comporte respectivement une ouverture d'alimentation et une ouverture de vidage avec des raccords (52, 54) de liaison à des conduits d'un système transporteur pneumatique (25, 34) et qu'il est prévu entre la périphérie (20) du rotor et le carter (2) une chambre radiale (22), caractérisé en ce que la chambre radiale (22) peut être reliée à une source d'air comprimé qui peut produire dans la chambre radiale un courant d'air qui soit tel que celle-ci puisse être nettoyée de la matière en vrac pouvant être accumulée dans celle-ci, en ce qu'il est prévu au moins une buse (44) d'introduction d'air comprimé et au moins un orifice de sortie (46) respectivement placés verticalement approximativement l'un au-dessus de l'autre et au voisinage du recouvrement inférieur ou du recouvrement supérieur (6, 7) du rotor, et à proximité des raccords (52, 54) du système transporteur (25, 34):

2. Dispositif selon la revendication 1, caractérisé en ce que l'air comprimé est prélevé à partir du système transporteur pneumatique.

3. Dispositif selon la revendication 2, caractérisé en ce qu'il est prévu dans le système transporteur pneumatique un tube de Pitot 5 par l'intermédiaire duquel l'air comprimé est prélevé.

4. Dispositif selon une des revendications 1 à 3, caractérisé en ce qu'il est prévu additionnellement le long de la périphérie du carter plusieurs buses (23) d'introduction d'air comprimé.

5. Dispositif selon une des revendications précédentes, caractérisé en ce que la pression peut être maintenue en permanence ou bien les buses d'introduction d'air comprimé peuvent être sollicitées brusquement avec une pression élevée.

6. Dispositif selon une des revendications 1 à 5, caractérisé en ce que l'orifice de sortie (46) conduit au système transporteur pneumatique (25).

7. Dispositif selon une des revendications 1 à 6, caractérisé en ce que l'orifice de sortie (46) peut être obturé.

8. Dispositif selon une des revendications 1 à 7, caractérisé en ce que la buse (44) d'introduction d'air comprimé est disposée radialement sur la périphérie du carter (2) à l'extrémité inférieure de la chambre radiale (22).

9. Dispositif selon la revendication 8, caractérisé en ce que l'orifice de sortie de la buse (44) d'introduction d'air comprimé est orienté en oblique vers le haut dans la chambre radiale.

10. Dispositif selon une des revendications 1 à 9, caractérisé en ce que l'orifice de sortie (46) est disposé sur le carter (2) dans une position très proche du système transporteur pneumatique.

11. Dispositif selon une des revendications 1 à 10, caractérisé en ce que la source d'air comprimé est soumise à une pression élevée et est reliée par l'intermédiaire d'un dispositif de régulation de pression avec la chambre radiale (22).

12. Dispositif selon une des revendications 1 à 11, caractérisé en ce que l'orifice de sortie (46) débouche dans le système transporteur pneumatique du côté de la sortie, c'est-à-dire dans la direction de transport vers le rotor.

13. Dispositif selon une des revendications précédentes, caractérisé en ce qu'il est prévu sur la périphérie du rotor (20) des nervures plates (62), orientées parallèlement à l'axe du rotor, formant avec la paroi intérieure du carter (2) des joints d'étanchéité en labyrinthe et qui divisent la chambre radiale (22) dans la direction périphérique en plusieurs chambres radiales.

14. Dispositif selon une des revendications précédentes, caractérisé en ce que les poches de transport (13a, 13b) sont disposées selon deux anneaux concentriques et les poches de transport d'un des anneaux sont décalées par rapport à celles de l'autre anneau.

# FIG.1

# FIG.2

0 150 446

Fig. 3

0 150 446

Fig.4

**Fig. 5**